(19) Europäisches Patentamt
European Patent Office
Office européen des brevets

(11) Veröffentlichungsnummer: **0 302 823 A2**

(12) **EUROPÄISCHE PATENTANMELDUNG**

(21) Anmeldenummer: **88810514.5**

(22) Anmeldetag: **26.07.88**

(51) Int. Cl.$^4$: **C 09 D 5/00**
C 08 G 59/06, C 08 G 59/40,
C 08 G 59/24

(30) Priorität: **03.08.87 US 81265**

(43) Veröffentlichungstag der Anmeldung:
**08.02.89 Patentblatt 89/06**

(84) Benannte Vertragsstaaten:
**BE CH DE FR GB IT LI NL**

(71) Anmelder: **CIBA-GEIGY AG**
**Klybeckstrasse 141**
**CH-4002 Basel (CH)**

(72) Erfinder: **Sammel, Richard K.**
**2608 Avon Avenue**
**Sinking Spring, PA 19608 (US)**

**Acocella, Concetta**
**338 Washington Avenue**
**New Rochelle New York 10801 (US)**

**Kapilow, Lorraine**
**8 Sound Road**
**Rye New York 10580 (US)**

(54) **Pulverlackzusammensetzung.**

(57) Wärmehärtbare Pulverlackzusammensetzung enthaltend
a) ein festes Epoxidharz mit einem Epoxyequivalentgewicht von 500-5000, das ein lineares Vorverlängerungsprodukt aus
(1) 50-90 Gew.-% an

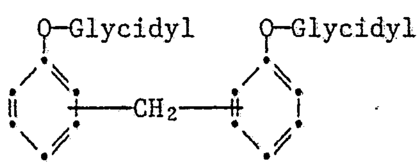

und
(2) 50-10 Gew.-% an 2,2-Bis-(4-hydroxyphenyl)propan (Bisphenol-A) darstellt, und
b) eine wirksame Menge eines Härters aus der Gruppe bestehend aus Dicyandiamid, aromatischen Aminen, carboxylterminierten, wärmehärtbaren Polyestern und phenolgruppenterminierten Polyhydroxyethern haben ausgezeichnete Verlaufeigenschaften während der Verarbeitung und zeigen eine hervorragende Korrosionsbeständigkeit.

EP 0 302 823 A2

## Beschreibung

### Pulverlackzusammensetzung

Die vorliegende Erfindung betrifft wärmehärtbare Pulverlackzusammensetzungen und insbesondere Zusammensetzungen auf Basis von Bis-(glycidyloxyphenyl)-methan.

Die Verwendung von Epoxidharzen auf der Basis von Bisphenol A in Pulverlacken ist aus den US-A 4,122,060 und US-A 4,169,187 bekannt, worin Pulverlackformulierungen auf der Basis eines festen Harzes aus Bisphenol A und Epichlorhydrin zusammen mit einem Epoxid-Novolak-Harz mit mehr als einer sich wiederholenden Einheit in der Harzkette und einer daraus resultierenden Epoxid-Funktionalität von grösser als zwei beschrieben werden. Das sogenannte Epoxid-Novolak-Harz wird durch Reaktion von Phenol mit Formaldehyd unter sauren Bedingungen und anschliessender Glycidylierung des so entstandenen Zwischenprodukts hergestellt und weist die folgende Struktur auf:

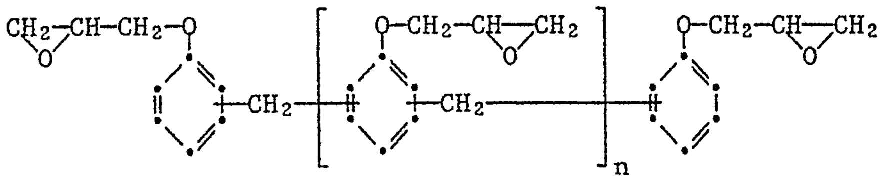

wobei der in Klammern befindliche Formelteil die sich wiederholende Einheit und n eine Zahl 0 oder eine ganze Zahl (1, 2 etc.) bedeutet.

Die JP-A 59-193,970 beschreibt ein Copolymer von Bisphenol A mit Bisphenol F durch Vorverlängerung des Diglycidylethers von Bisphenol A mit einem Unterschuss an Bisphenol F (typisch ist ein Unterschuss von 20 Gew.-%), wobei 2-Methylimidazol als Katalysator eingesetzt wird. Es entsteht so ein Pulverlack mit guter Haftfähigkeit, Flexibilität und Schlagzähigkeit nach der Härtung mit einem phenolterminierten Polyhydroxyether und 2-Methylimidazol als Beschleuniger.

Die US-A 4,176,142 offenbart eine Pulverlackzusammensetzung auf der Basis von verschiedenen Bisphenolen wie z.B. Bisphenol A, F, S usw. die mit Epichlorhydrin umgesetzt werden und feste Polyglycidylpolyether mit einem Epoxyequivalentgewicht zwischen 500 und 5000 bilden.

In der Praxis jedoch bietet die Herstellung von Festharzen aus Bisphenol F erhebliche Schwierigkeiten, da das vorerst gebildete Reaktionsprodukt aus Phenol und Formaldehyd kein zweiwertiges Phenol darstellt, d.h. das Reaktionsprodukt ist durch Oligomere mit einem höheren Molekulargewicht verunreinigt.

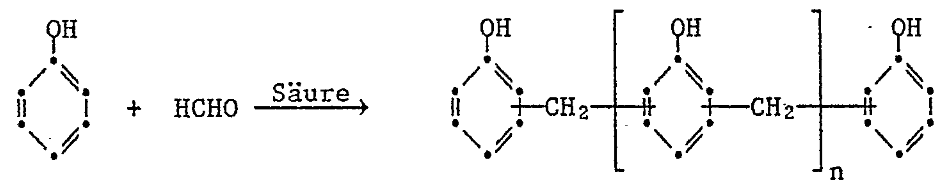


(Ueberschuss) (und Isomere)

wobei n 0, 1, 2, 3 etc. bedeutet.

Daher führt die Glycidylierung des rohen Bisphenols F unausweichlich zu flüssigen Harzen mit einer Epoxidfunktionalität von grösser als zwei. Die nachfolgende Umwandlung der flüssigen Produkte in feste Harze durch Vorverlängerung mit zweiwertigen Phenolen führt zu ausgedehnter Verzweigung und sogar zur Gelierung, vor allem bei Harzen mit einem Epoxyequivalentgewichtsbereich von 500 bis 5000.

Zusätzlich erschwert die Vorverlängerung des glycidylierten Bisphenol-F-Harzes mit Bisphenol F, wie sie üblicherweise durchgeführt wird, die Polymerisierungsreaktion, da beide Ausgangsmaterialien nicht die genügende Reinheit besitzen, um zu einer linearen, nicht verzweigten Harzbildung zu führen. Die Folge ist ein nachteiliger Effekt auf die Harzviskosität und die Harzschmelzflusseigenschaften.

Die Herstellung von Copolymeren aus Bisphenol F und Tetrachloro-Bisphenol A durch Vorverlängerung des Bisphenol F-diglycidylethers mit dem chlorierten Bisphenol A wird in allgemeiner Form durch N.H. Reinking et al., J. Applied Polymer Sci. 7, 2145 (1913) beschrieben. Die Eigenschaften bezüglich der Glasumwandlungstemperatur, einer ver minderten Viskosität und der Gasundurchlässigkeit wurden für eine Reihe von Copolymeren aus verschiedenen Gemischen von zweiwertigen Phenolen und Epichlorhydrin bestimmt.

Es wurde nun gefunden, dass Pulverlackzusammensetzungen auf Epoxidharzbasis enthaltend einen hohen Anteil an glycidyliertem Bis-(hydroxyphenyl)-methan verbesserte Fliesseigenschaften und Korrosionsbeständigkeit gegenüber konventionellen, auf Bisphenol-A basierenden Pulverlackzusammensetzungen aufweisen. Solche Zusammensetzungen enthalten 50-90 Gew.-% an Methylenbisphenol-Teilkomponente verglichen mit Stand der Technik-Formulierungen die ungefähr 10-40 Gew.-% davon aufweisen.
Das obenerwähnte Japanische Patentdokument beschreibt Zusammensetzungen enthaltend einen überwiegenden Anteil an glycidyliertem Bisphenol A-Coreaktionspartner (50-90 Gew.%).

Bei der Herstellung von Bisphenol-F durch Umsetzung von Phenol mit Formaldehyd entsteht kein einheitliches Produkt, sondern ein Gemisch von monomerem und oligomerem Material, das durch die nachstehende Formel,

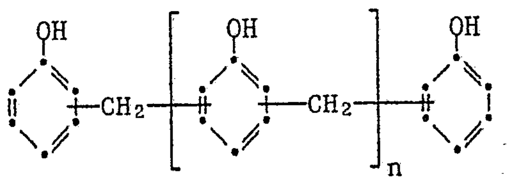

worin n Null oder die Zahlen 1, 2, 3, 4 und höher bedeutet, charakterisiert werden kann.

Wir dieses Gemisch mit Epichlorhydrin glycidyliert, so ergibt dies ein Gemisch von difunktionellen und polyfunktionellen Epoxyverbindungen die sich von den obigen Strukturen ableiten, worin n 1 oder grösser ist.

Wird dieses Gemisch in monomeres (n = o) und oligomeres ($n \geqq 1$) Material getrennt, enthält die Monomer-Fraktion immer noch ein Gemisch von Isomeren mit verschiedener relativer Position der OH- und -$CH_2$-Gruppen. Im allgemeinen gliedert sich das Isomerengemisch wie folgt auf:
Bis-(4-glycidyloxyphenyl)-methan 20 - 35 Gew.-%
Bis-(2-glycidyloxyphenyl)-methan 15 - 30 Gew.-%
(4-Glycidyloxyphenyl)-(2-glycidyloxyphenyl)-methan 47 - 52 Gew.-%

Im Rahmen dieser Erfindung wird unter Glycidylether von Bis-(hydroxyphenyl)-methan ein solches Gemisch von Isomeren verstanden und in Formelsprache wie folgt ausgedrückt:

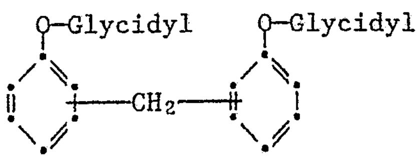

Nachstehend in dieser Patentanmeldung werden sie generell Bis-(glycidyloxyphenyl)-methan genannt.

Die vorliegende Erfindung betrifft eine wärmehärtbare Pulverlackzusammensetzung enthaltend

a) ein festes Epoxidharz mit einem Epoxyequivalentgewicht von 500-5000, vorzugsweise 500-1500, das ein lineares Vorverlängerungsprodukt aus

(1) 50-90 Gew.-% an

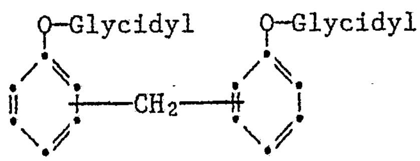

und

(2) 50-10 Gew.-% an 2,2-Bis-(4-hydroxyphenyl)propan (Bisphenol-A) darstellt, und

b) eine wirksame Menge eines Härters aus der Gruppe bestehend aus Dicyandiamid, aromatischen Aminen, carboxylterminierten, wärmehärtbaren Polyestern und phenolgruppenterminierten Polyhydroxyethern.

Im Fall von Dicyandiamid als Härter beträgt die wirksame Menge an Härter b) als Gewichtsverhältnis 2-15 Gew.-Teile pro je 85-98 Gew.-Teile an Komponente a).

Im Fall eines carboxylterminierten, wärmehärtbaren Polyesters als Härter beträgt die wirksame Menge an Härter b) als Gewichtsverhältnis 60-80 Gew.-Teile pro je 20-40 Gew.-Teile an Komponente a).

Im Fall eines phenolgruppenterminierten Polyhydroxyethers als Härter beträgt die wirksame Menge an Härter b) als Gewichtsverhältnis 10-30 Gew.-Teile pro je 70-90 Gew.-Teile an Komponente a).

Im Fall eines aromatischen Amins, wie z.B. 4,4′-Diaminodiphenylmethan oder 4,4′-Diaminodiphenylsulfon, beträgt die wirksame Menge an Härter b) als Gewichtsverhältnis 5-15 Gew.-Teile pro je 85-95 Gew.-Teile an

Komponente a).

Weiter können die erfindungsgemässen Pulverlackzusammensetzungen noch Pigmente, Füllstoffe, Verlaufsmittel sowie weitere in Epoxid-Lackzusammensetzungen übliche Zusatzstoffe enthalten.

Bevorzugt sind Pulverlackzusammensetzungen enthaltend zusätzlich ein Pigment, worin das Verhältnis Pigment zu Epoxidharz-Bindemittel 5 bis 100:100 beträgt.

Das gereinigte Bis-(glycidyloxyphenyl)-methan wird mit kommerziell erhältlichem Bisphenol A zu einem festen Harz mit einem Epoxyequivalentgewicht von 500-5000, bevorzugt 500-2500 und insbesondere bevorzugt 500-1500, zur Verwendung in Pulverlackformulierungen vorverlängert.

Der Diglycidylether von Bis-(hydroxyphenyl)-methan weist eine Funktionalität von zwei auf und besitzt eine Viskosität von 1200-1800 mPa•s bei 25°C und ist flüssig. Jedoch neigt er zur Verfestigung zu einem kristallinen Festkörper bei Lagerung bei Raumtemperatur. Ein typischer Wert für das Epoxyequivalentgewicht beträgt 159-170.

Im Gegensatz zum rohen Reaktionsgemisch von glycidyliertem Bisphenol F eignet sich der gereinigte Diglycidylether von Bis-(hydroxyphenyl)-methan zur linearen Vorverlängerung mit difunktionellen Phenolen, wie z.B. Bisphenol A, und gibt lineare Polyhydroxyether-Copolymere, die fest sind und ein Epoxyequivalentgewicht von 500-5000 aufweisen. Diese Copolymere sind besonders gut geeignet zur Anwendung in Pulverlacken, wenn ihr Epoxyequivalentgewicht 500-1500 beträgt.

Versuche, rohes glycidyliertes Bisphenol F mit difunktionellen Phenolen vorzuverlängern, führen zu verzweigten, hochviskosen Festharzen oder, im Fall von einem hohen Verhältnis von difunktionellem Phenol zu rohem Polyglycidyl-Bisphenol-F-Harz, sogar zu ausgelierten Reaktionsprodukten.

Daher gibt es nur wenig Information auf dem Gebiet der Pulverlackzusammensetzungen auf der Basis von vorverlängertem glycidyliertem Dihydroxydiphenylmethan.

Daher war es überraschend, dass Pulverlackformulierungen auf Basis von vorverlängerten Harzen aus gereinigtem glycidyliertem Bis-(hydroxyphenyl)-methan im Vergleich zu konventionellen Pulverlackharzen auf reiner Bisphenol A-Basis sowohl verbesserte Verlaufseigenschaften als auch eine bessere Korrosionsbeständigkeit aufweisen. Zusätzlich weisen die festen linear vorverlängerten Harze auf Basis von Copolymeren aus glycidyliertem Bis-(hydroxyphenyl)-methan und Bisphenol A niedrigere Viskositäten auf als konventionelle vorverlängerte Bisphenol-A-Epoxidharze.

Daher betrifft die vorliegende Erfindung auch die Verwendung von solch linear vorverlängerten Harzen aus gereinigtem Bis-(glycidyloxyphenyl)-methan für gut verlaufende Pulverlacke zum Korrosionsschutz.

Die erfindungsgemäss eingesetzten Härter umfassen sowohl die festen, wärmehärtbaren carboxylterminierten Polyester, wie sie typisch in Pulverlacken verwendet werden. wie auch die Pulverlackhärter Dicyandiamid, die aromatischen Amine und die aus einem Ueberschuss an Bisphenol A mit einem flüssigen Epoxidharz hergestellten phenolgruppenterminierten Polyhydroxyether.

Die vorliegenden Pulverlackzusammensetzungen werden auch formuliert mit Pigmenten oder Füllstoffen wie z.B. Titandioxid und auch mit Verlaufsmitteln wie z.B. Modaflow®II, ein käufliches Acrylat-Copolymer (Monsanto Chemical Co., USA) eingesetzt.

Geeigneter wärmehärtbarer carboxylterminierter Polyester ist z.B. Arakote®3005 (Ciba-Geigy Corp., USA).

<u>Beispiel 1:</u>

1000 Gew.-Teile Bis-(glycidyloxyphenyl)-methan, das von jeglichem oligomeren Material mit einer Epoxidfunktionalität von grösser als zwei abgetrennt wird, werden in ein mit Rührer, Rückflusskühler, Thermometer und Stickstoffeinlassstutzen versehenes Glasreaktionsgefäss gebracht. Darauf werden unter Rühren zum flüssigen Harz, das unter Stickstoff auf 100-120°C erwärmt wird, 450 Gew.-Teile Bisphenol A langsam zugegeben und gerührt bis sich das Bisphenol A vollständig gelöst hat. Darauf wird 0,1 Gew.-Teil Formylmethyltriphenylphosphoniumchlorid, ein Phosphoniumsalz-Vorverlängerungskatalysator zugegeben und die Reaktionsmischung auf 135°C während 2 Stunden aufgeheizt. Dann wird die Temperatur auf 165°C erhöht und der Ansatz während 4 Stunden so belassen, worauf ein Epoxidwert von 0,154 Equivalenten/100 g (Epoxyequivalentgewichts ist 649) erhalten wird (Harz A). Die ICI Schmelzviskosität beträgt 1060 mPa•s bei 150°C.

Das Harz wird mit Dicyandiamid als Härter, Titandioxid und Modaflow-Verlaufsmittel wie folgt formuliert.

| Komponente | Gew.-Teile |
|---|---|
| Harze A | 64,6 |
| Dicyandiamid | 5,4 |
| $TiO_2$ | 28,5 |
| Modaflow®II | 1,5 |

Die physikalischen Eigenschaften der Pulverlackzusammensetzung werden nach 15 Min. Härtung bei 200° C auf unbehandelten, kaltgewalzten Stahlplatten wie folgt bestimmt:

| Eigenschaft | Resultat |
|---|---|
| Filmdicke | 0,0508 mm |
| Haftung | ausgezeichnet |
| Bleistift Härte | 4H |
| MEK Reibetest | > 100 Reibungen |
| Dornbiegeprüfung nach nach DIN 53 152. | bestanden 3,2 mm |
| Schlagzähigkeit | 1,4 kg m |
| Gelierzeit bei 200°C | 77 sec |
| Fliesverhalten auf einer Glasplatte | 36 mm |
| Salzsprühtest 750 h, Unterrostung (ASTM117-57T, und Federal Test-Methode 141, Methode 6061) | 4 mm |

MEK = Methylethylketon

Beispiel 2:

Das nach Beispiel 1 hergestellte Festharz wird mit einem carboxylterminierten wärmehärtbaren Polyester (Arakote®3005, Ciba-Geigy, auf Basis einer aromatischen Dicarbonsäure und aliphatischen Diolen) als Härter wie folgt formuliert:

| Komponente | Gew.-Teile |
|---|---|
| Harze A | 25,5 |
| Arakote®3005 | 44,5 |
| $TiO_2$ | 28,5 |
| Modaflow®II | 1,5 |

Die physikalischen Eigenschaften des formulierten Pulverlacks werden nach 15 Min. Härtung bei 200°C bestimmt.

| Eigenschaft | Resultat |
|---|---|
| Filmdicke | 0,0508 mm |
| Haftung | ausgezeichnet |
| Bleistifthärte | 4H |
| MEK Reibetest | 100 Reibungen (trüb) |
| Dornbiegeprüfung nach nach DIN 53 152 | bestanden 3,2 mm |
| Schlagzähigkeit | 1,8 kg m |
| Gelierzeit bei 200°C | 76 sec |
| Fliesverhalten auf einer Glasplatte | 58 mm |
| Salzsprühtest 750 h, Unterrostung (ASTM117-57T, und Federal Test-Methode 141, Methode 6061) | 8 mm |

Beispiel 3:

Das nach Beispiel 1 hergestellte Festharz wird mit einem phenolgruppenterminierten Polyhydroxyether (HT XU 241, Ciba-Geigy) als Härter wie folgt formuliert:

| Komponente | Gew.-Teile |
|---|---|
| Harze A | 50,6 |
| HT XU 241 | 19,4 |
| $TiO_2$ | 28,5 |
| Modaflow®II | 1,5 |

Die physikalischen Eigenschaften des formulierten Pulverlacks werden nach 15 Min. Härtung bei 200°C bestimmt.

| Eigenschaft | Resultat |
|---|---|
| Filmdicke | 0,0508 mm |
| Haftung | ausgezeichnet |
| Bleistifthärte | 4H |
| MEK-Reibetest | 100 Reibungen (trüb) |
| Dornbiegeprüfung | bestanden, 3,2 mm |
| Schlagzähigkeit | 1,8 kg m |
| Gelierzeit 200°C | 42 sec |
| Fliesverhalten auf einer Glasplatte | 49 mm |
| Salzsprühtest 750 h, Unterrostung | 5 mm |

**Patentansprüche**

1. Wärmehärtbare Pulverlackzusammensetzung enthaltend

a) ein festes Epoxidharz mit einem Epoxyequivalentgewicht von 500-5000, das ein lineares Vorverlängerungsprodukt aus

(1) 50-90 Gew.-% an

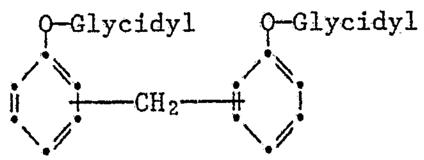

und

(2) 50-10 Gew.-% an 2,2-Bis-(4-hydroxyphenyl)propan (Bisphenol-A) darstellt, und

b) eine wirksame Menge eines Härters aus der Gruppe bestehend aus Dicyandiamid, aromatischen Aminen, carboxylterminierten, wärmehärtbaren Polyestern und phenolgruppenterminierten Polyhydroxyethern.

2. Wärmehärtbare Pulverlackzusammensetzung gemäss Anspruch 1, worin das feste Epoxidharz ein Epoxyequivalentgewicht von 500-1500 aufweist.

3. Wärmehärtbare Pulverlackzusammensetzung gemäss Anspruch 1, enthaltend die Komponenten a) und b) im Gewichtsverhältnis

a) 85-98 Gew.-Teile festes Epoxidharz und

b) 2-15 Gew.-Teile Dicyandiamid-Härter.

4. Wärmehärtbare Pulverlackzusammensetzung gemäss Anspruch 1 enthaltend die Komponenten a) und b) im Gewichtsverhältnis

a) 20-40 Gew.-Teile festes Epoxidharz und

b) 60-80 Gew.-Teile carboxylterminierter wärmehärtbarer Polyester als Härter.

5. Wärmehärtbare Pulverlackzusammensetzung gemäss Anspruch 1 enthaltend die Komponenten a) und b) im Gewichtsverhältnis

a) 70-90 Gew.-Teile festes Epoxidharz und

b) 10-30 Gew.-Teile phenolgruppenterminierter Polyhydroxyether als Härter.

6. Wärmehärtbare Pulverlackzusammensetzung gemäss Anspruch 1 enthaltend die Komponenten a)

und b) im Gewichtsverhältnis

a) 85-95 Gew.-Teile festes Epoxidharz und

b) 5-15 Gew.-Teile aromatisches Amin als Härter.

7. Wärmehärtbare Pulverlackzusammensetzung gemäss Anspruch 1 enthaltend zusätzlich ein Pigment, worin das Verhältnis Pigment zu Epoxidharz 5 bis 100:100 beträgt.

8. Verwendung von linear vorverlängerten Epoxidharzen nach Anspruch 1a) in gut verlaufenden Pulverlacken zum Korrosionsschutz.